# EUROPEAN PATENT APPLICATION

(11) **EP 2 375 357 A1**
(43) Date of publication of application: **12.10.2011**
(21) Application number: 11161024.2
(22) Date of filing: 04.04.2011
(51) Int. Cl.: G06F 21/00

(54) **Method and apparatus for authorizing delivery of streaming video to licensed viewers**

(30) Priority: 06.04.2010 US 754742
(71) Applicant: Copyright Clearance Center, Inc., Danvers, MA 01923 (US)
(72) Inventor: Kolbert, Matthew, Beverly, MA 01915 (US); Klebe, Skott C., Lexington, MA 02420 (US)
(74) Representative: Borchert, Uwe Rudolf

(57) **Abstract**

Licensed access to selected videos is provided by a licensing service organization that obtains licenses from video content providers and combines these licenses into a new license for selected videos for a licensee organization. Administrators at the licensee organization then obtain a video authorization key for each video selection from the licensing service organization and embed those keys into web pages that are accessible via an intranet. Navigating to a web page for that selection from a computer connected to the intranet causes a viewing request that includes the embedded video authorization key and an IP address of the computer to be sent to a server at the licensing service organization. The server uses the incoming information to determine whether the request is from a predetermined intranet computer and if so to determine whether the request can be granted based on the new license conditions.

## Description

The Internet has become a popular medium for transmitting streaming video from a source to a user, but in many cases popularity has preceded profitability. For example, Google's YouTube video sharing service has become one of the most popular sites on the web by offering end users free access to upload and download video, but Google has yet to demonstrate that the service can be operated profitably, while it still struggles to enforce copyright rights over materials uploaded by the users.

Hulu has become another of the fastest growing sites by offering streaming video from prime-time network television shows to end users supported by accompanying advertising. However, it is unclear whether advertising revenues alone will be able to offset the required network access charges.

Finally, neither of these free services offers an answer to providers of high-value multimedia content to paying audiences, whose business models rest on charging for access to their content. Login mechanisms for authorizing access to content exist, but have not yet been embraced by video consumers, due in part to the difficulty in getting the consumers to enter into a login account relationship with each potential provider.

Thus, a need exists for a method and apparatus that allows access to video to be authorized from a number of providers in a manner that places a minimal authentication burden load on the end user, while still protecting copyright and licensing arrangements specified individually by a plurality of multimedia content providers.

In accordance with the principles of the invention, members of a licensee organization are permitted to view video selections in conventional browsers running in computers connected to an intranet belonging to the organization. Licensed access to the videos is provided by a licensing service organization that obtains licenses from video content providers and combines these licenses into a new license for selected videos for the licensee organization. Administrators at the licensee organization then obtain a video authorization key for each video selection from the licensing service organization and embed those keys into web pages that are accessible via the intranet. A viewer desiring to display a video selection navigates to a web page for that selection from a computer connected to the intranet causing a viewing request that includes the embedded video authorization key to be sent to a server at the licensing service organization. The server uses the incoming information to determine whether the request can be granted based conditions in a license for that video selection. If the request can be granted, the licensing service organization returns an access token to the viewer browser, which token can be used to download and display the video from a content provider network.

In one embodiment, the server uses the video authorization key to identify a license that applies to the licensee organization and the video selection.

In another embodiment, the internet IP address of the viewer's computer is sent to the licensing service organization server along with the video authorization key and the IP address is compared to valid address ranges in the new license for the licensee organization to determine if the request is valid.

In still another embodiment, when the viewer navigates to a web page for a video selection a display program is downloaded from the licensing service organization and the display program generates the viewing request.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings is shown:
- Fig. 1: a flowchart showing the steps in an illustrative process for setting up a video content licensing and display system;
- Fig. 2: block schematic diagram showing the apparatus involved in setting up the video content licensing and display system;
- Fig. 3: a table relation diagram showing tables for storing customer information and the table relations;
- Fig. 4: a table relation diagram showing tables for storing license information and the table relations;
- Fig. 5: a flowchart showing the steps in an illustrative process for embedding an access key for a selected video in an intranet web page;
- Fig. 6A-6D: when placed together, form a flowchart that shows the steps in an illustrative process for permitting a viewer to access an intranet webpage associated with a selected video and to display that video in a conventional internet browser, and
- Fig. 7: a block schematic diagram that illustrates the apparatus used to perform the process shown in Fig. 6A-6D.

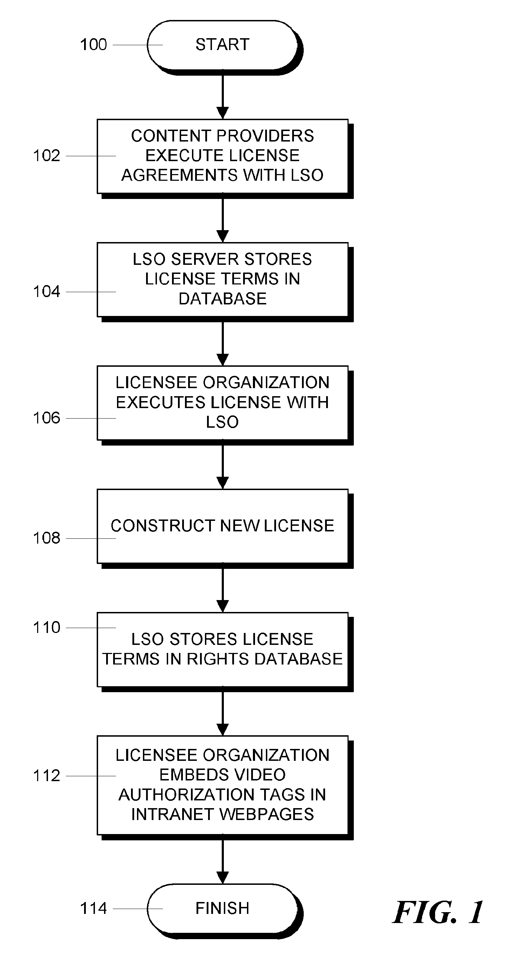

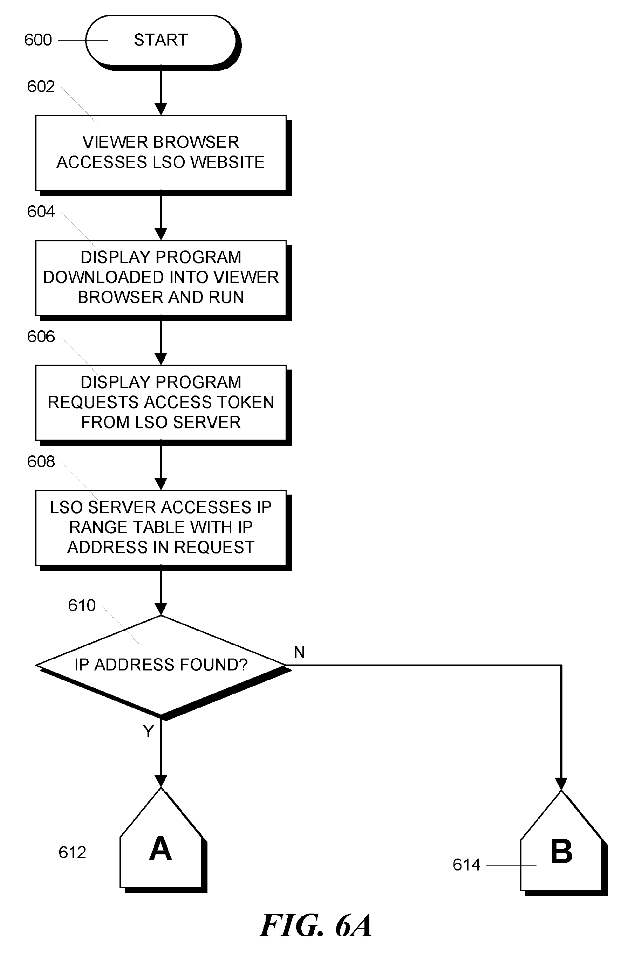

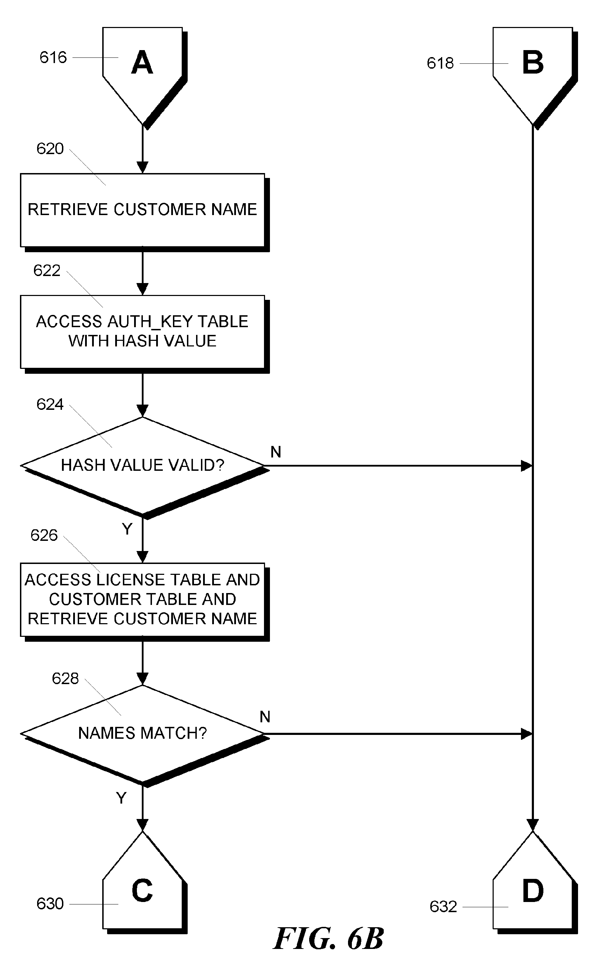

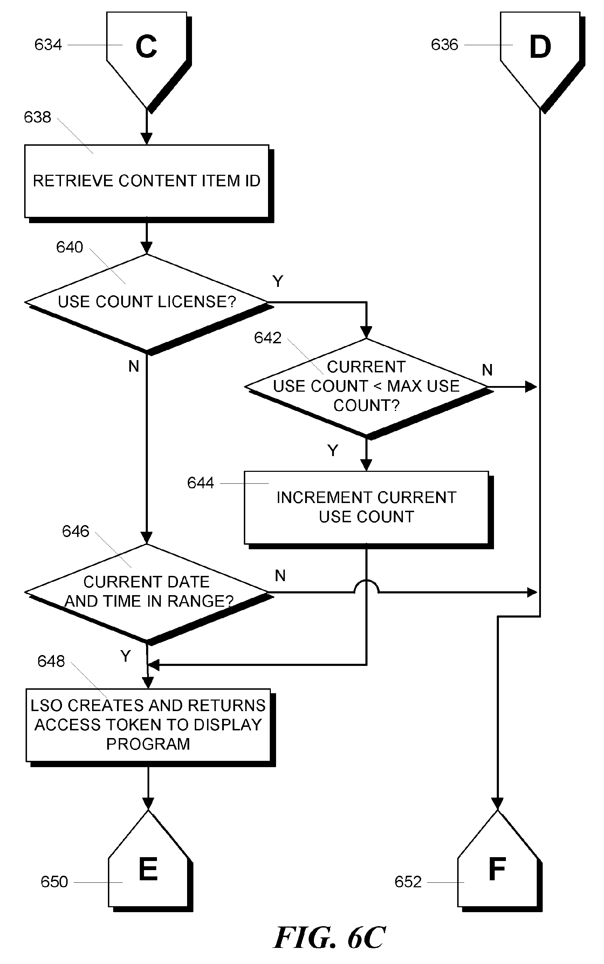

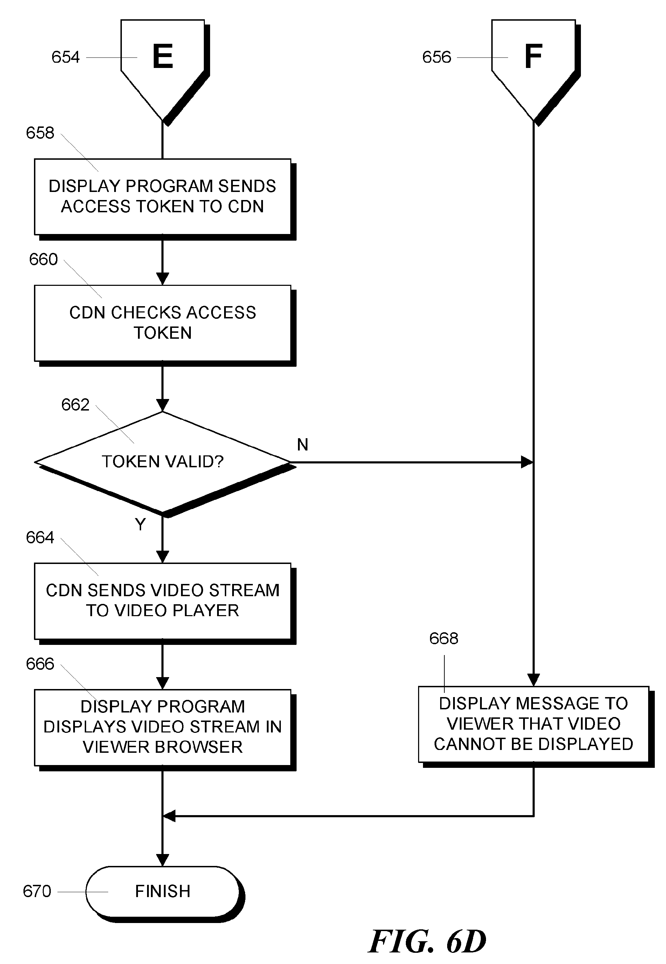

Fig. 1-7 illustrate the steps in an illustrative process for creating a video content licensing and display system in accordance with the principles of the invention. The overall process comprises a setup process shown in Fig. 1-5 and a viewing process shown in Fig. 6-7. During the set up process, a licensee organization obtains a license for its members to view video content generated by video content providers and configures web pages on an organization intranet to display the video content. After the set up process is complete, an organization member can view the video content with a video player having a dedicated internet connection, whether browser-based (using, for example, a browser plug-in such as the Flash Player sold by Adobe Systems, Inc.), a stand-alone video display application (such as the Media Player application sold by Microsoft Corporation), or a cable/satellite set-top box.

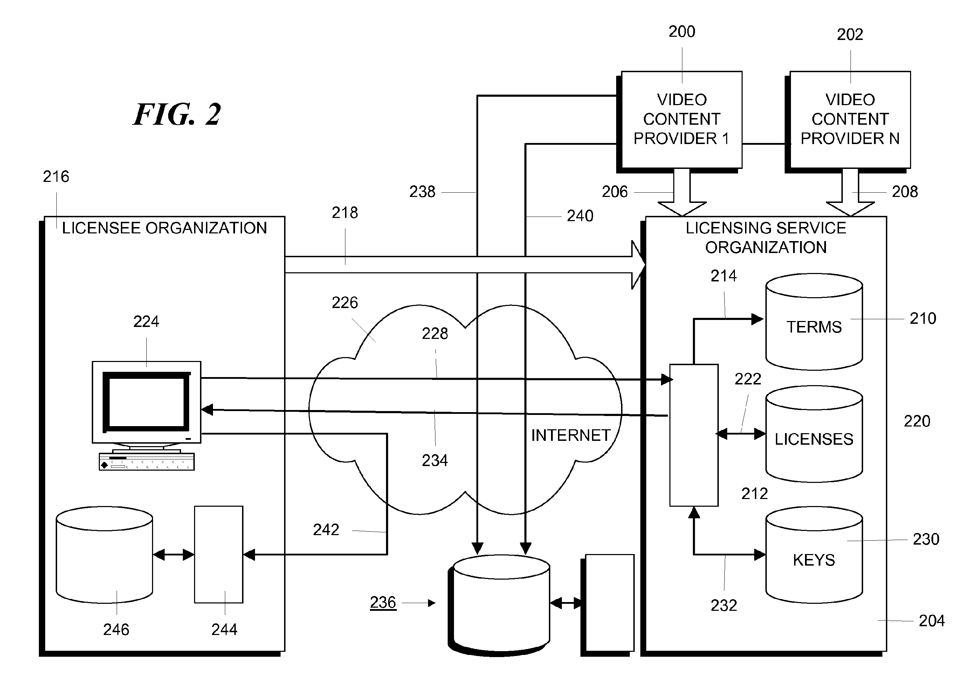

The set up process starts in step 100 and proceeds to step 102 where video content providers (video content providers 200 and 202 are illustratively shown in Fig. 2) enter into content licensing agreements with a licensing service organization (LSO) 204 as indicated schematically by arrows 206 and 208. These licenses can take many forms, but generally have similar terms, such as those listed below. Example terms:

| ***Terms for Video Content Provider 1:*** |
|---|
| (T1)Organizations may license video content on a subscription basis for viewing of any one video selection up to 50 times, on any number of occasions. |
| (T2)For additional payment of $X, organizations may purchase a license for viewing of a single video selection up to 500 times. |

| ***Terms for Video Content Provider 2:*** |
|---|
| (T3) Organizations may license video content on a subscription basis for viewing of all video selections on any number of occasions, for a period of one year. |

In step 104, the terms for each license are stored in a terms database 210 by a server 212 at the LSO location as indicated schematically by arrow 214. In the terms database 210, the terms can be stored in data structures such as those illustrated in U.S. Patent No. 5,991,876. At some point, video content providers 200 and 202 also upload the actual video content into a content distribution network (CDN) server 236 via Internet 226 as indicated schematically by arrows 238 and 240.

In accordance with the principles of the invention, a licensee organization customer can purchase content viewing licenses from the licensing service organization for users that are members of the organization. For example, in step 106, a licensee organization customer 216 requests to purchase a one-year subscription license from the LSO 204 that allows its member users to view multimedia content from both video content provider 1 and video content provider 2 as shown schematically by arrow 218.

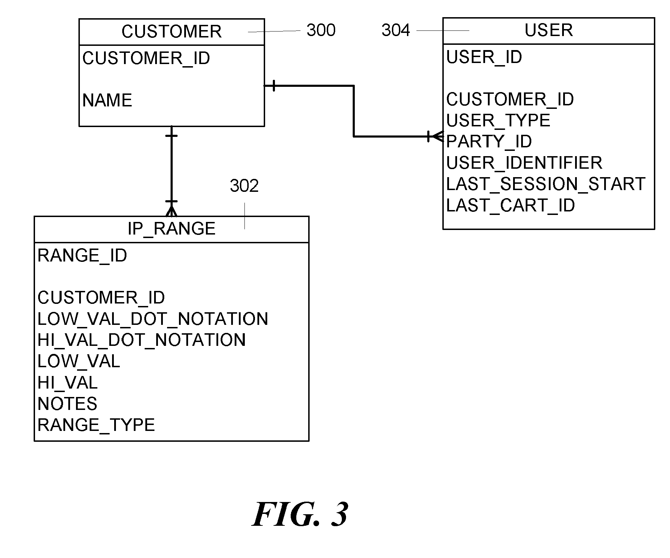

As part of the purchase request, the licensee organization 216 provides the LSO 204 with a range of internet protocol (IP) addresses. Each address within the range corresponds to a network address of a network-attached computer on which members of the licensee organization may view the licensed content. These address range is stored in data structures such as those shown in Fig. 3 which illustrates three interrelated tables. These tables include the customer table 300, the IP range table 302, and the user table 304. Each table includes a primary key that uniquely identifies each record in the table. For example, the customer table 300 has a customer ID primary key. The primary keys are shown separated as the first entry in the body of the table. Additional fields are also shown in which the content of the field is evident from the field name. The tables also include foreign keys that relate the tables in a manner well-known to those skilled in the art. For example, the IP range table 302 is related to the customer table 300 by the customer_ID key which is a foreign key in table 302. User information is stored in table 304 and includes links to customer values.

The IP address range table 302 includes fields which store the low and high IP addresses corresponding to the ends of the range in both "dot" notation (12.345.678.900) and as a value (12345678900).

In response to the request, the LSO server 214 accesses terms database 210 as indicated by arrow 214 and extracts the relevant terms, for example, the terms shown above for video content providers 1 and 2. Then, as set forth in step 108, the LSO server 212 constructs a new license. This new license contains a union of the relevant terms from the license agreements between the LSO 204 and video content providers 1 and 2 (200, 202) and includes the IP address range provided by the licensee organization. For example, the new license might include terms such as:

| New License: |
|---|
| (L1) licensee organization members may view video content provider 1 content at their discretion, with up to 50 members viewing any one selection. (T1) |
| (L2) licensee organization members may view video content provider 2 content at their discretion, for a period of one year. (T1) |
| (L3) licensee organization members may view any of the above licensed content from network-attached computers using publicly-available IP addresses ranging from 12.345.678.001 to 12.345.678.254. |

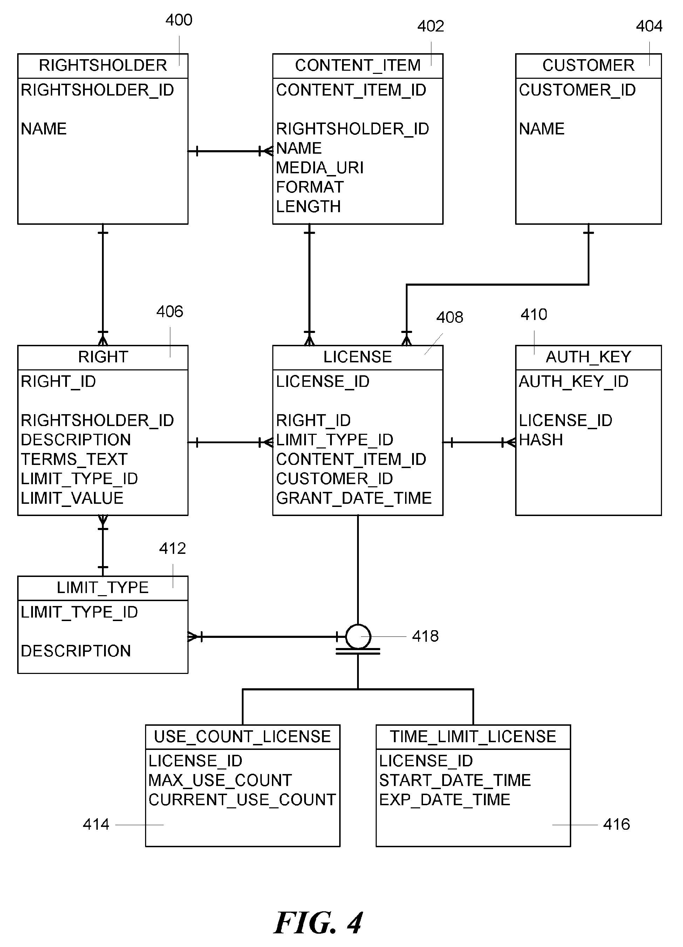

In step 110, as indicated schematically by arrow 222, the LSO server 212 records the new license terms in a license database 220 in data structures such as those shown in Fig. 4 which illustrates seven interrelated tables and two sub-tables. These tables include the rightsholder table 400, the content_item table 402, the customer table 404 (which is the same table as customer table 300 illustrated in Fig. 3), the right table 406, the license table 408, the auth_key table 410 and the limit type table 412. Two sub-tables indicated by symbol 418 are derived from the license table 408 and the limit_type table 412. Each sub-table includes all of the fields from its parent table plus the fields in the sub-table. The fields in the sub-table are determined by the limit_type value. For example, use_count_license sub-table 414 includes all of the fields in license table 408 plus a max_use_count field and a current_use_count field.

The right table 406 contains one record for each "limit type" that the rightsholder chooses to authorize. In the illustrative embodiment, two limit types, "use count" and "time limit" are shown. However, those skilled in the art would understand that other limit types could be incorporated without changing the scope and spirit of the invention.

As with the tables illustrated in Fig. 3, each table shown in Fig. 4 includes a primary key that uniquely identifies each record in the table. For example, the license table 408 has a license_ID primary key. The primary keys are shown separated as the first entry in the body of the table. Additional fields are also shown containing information that is evident from the field name.

Specifically, for each content item for which the licensee organization desires a license, the licensee organization accesses the content_item table 402 stored in the license database 220 with a content_item_id and uses the rightholder_id stored therein to access the rightsholder table 400. The licensee organization chooses a right to license from the list of rights stored in the rights table 406 and belonging to the selected rightsholder_id. The licensee organization then purchases a license for the selected right.

For each license purchased, the LSO server creates a new license record in the license table 408 and a corresponding record in one of the license subtype tables as determined by the value of the limit_type_id field in the new license record. In the illustrative embodiment, the value of the limit_type_id field selects one of use_count_license table 414 or time_limit_license table 416 with the table attributes populated appropriately.

The LSO server also inserts a corresponding record into the auth_key table 410 in the keys database 230. The license_id field contains the primary key of the new license record and the hash field contains a value that is either a large random number or a strong cryptographic hash of the license attributes and the current date-time. The hash value is unique for every license granted.

After purchasing the content viewing license from the LSO 204, personnel from the licensee organization 216 can embed video authorization keys into web pages of an intranet associated with the organization as set forth in step 112. As described in more detail below, each video authorization key allows a member of the organization to access an intranet web page and view a video selection associated with that page. The set up process then finishes in step 114.

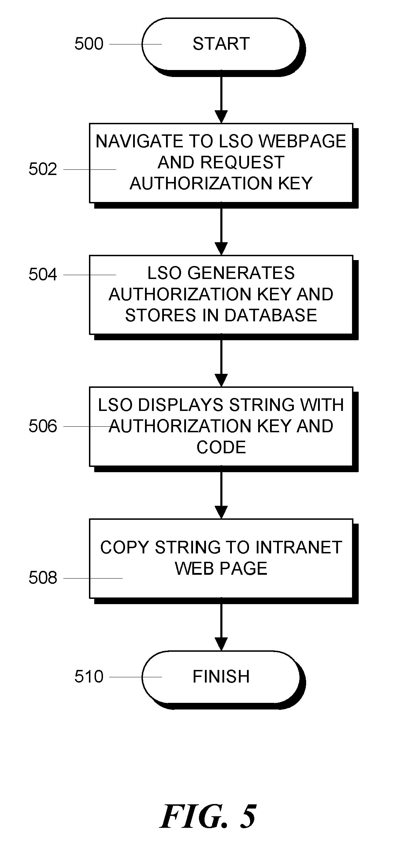

Fig. 5 illustrates, in more detail, the steps in the process of embedding an authorization key for a video selection into a licensee organization intranet page. This process begins in step 500 and proceeds to step 502 where an administrator in the licensee organization navigates, using an ordinary web browser 224 via the Internet 226, to a website hosted by the LSO server 212. Using the customer ID of the licensee organization which is involved in the transaction and the content_item_id for the desired content, the administrator sends a request for a video authorization key to the LSO server 212 as indicated by arrow 228.

In response to the request, as indicated in step 504, the LSO server 212 uses the customer ID and the content_item_id to access the license table 408 in the licenses database 220 to select a license purchased by the licensee organization for the requested content item. The LSO server 212 then retrieves the hash field value from the auth_key table 410 of the keys database 230 using the licensed as indicated by arrow 232.

Next, in step 506, the LSO server 212 sends information to the browser 224 via the Internet 226 as indicated by arrow 234. This information causes a string to be displayed on the browser 224. The string contains a video authorization key in the form of an HTML <EMBED> tag required to display a browser-based video player. The tag references a URL of a video display program hosted at the LSO website by server 212, which displays the requested video, and includes the aforementioned hash value.

In step 508, the administrator copies the text of the <EMBED> tag and pastes the text into the source code of an intranet web page hosted by server 244 and stored in database 246. This latter action is indicated schematically by arrow 242. The process of embedding the video authorization key then finishes in step 510. This process is repeated for each video that can be viewed by members of the licensee organization 216 so that a key for that video is embedded into at least one intranet web page.

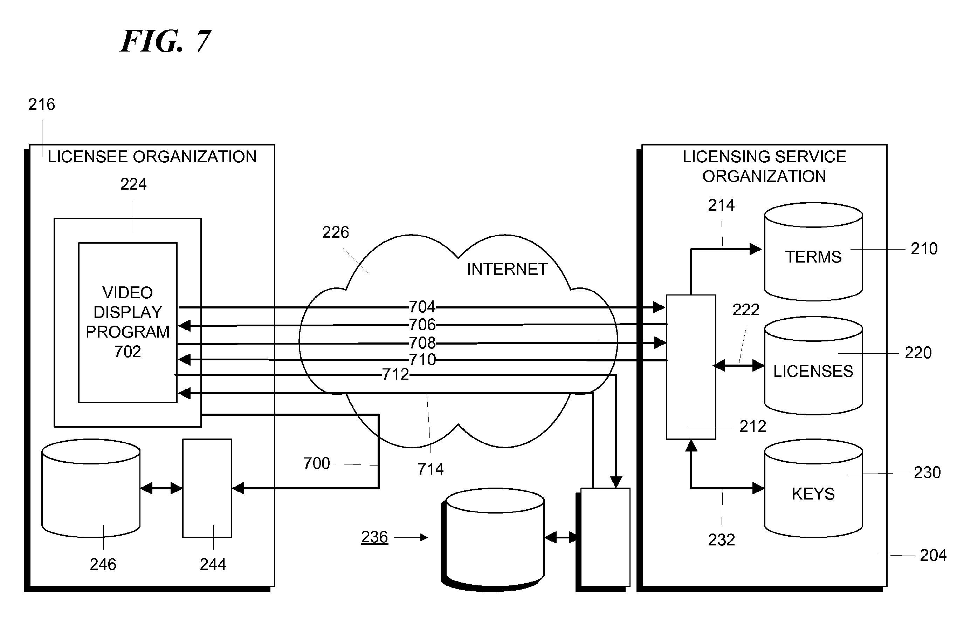

Fig.s 6A-6D and 7 illustrate the steps performed in a process that occurs when a member of licensee organization 216 navigates to an intranet web page containing an embedded authorization key and attempts to view a video selection for which a license has been obtained by licensee organization 216. This process begins in step 600 and proceeds to step 602 where a member of the licensee organization 216 (Fig. 7) uses a conventional browser 224 to access an intranet web page hosted by server 244 into which an authorization key was previously embedded as set forth in Fig.s 2-5 and was stored in database 246. In the case where the browser 224 is using a browser-based video player, the browser 224 runs the video player, which extracts the URL of the video display program from HTML <EMBED> tag in the HTML code of the intranet page. The browser-based video player then uses the URL to access the LSO server 212 as indicated by arrow 704 and to download the video display player 702 from the LSO server 212 as indicated schematically by arrow 706 and runs the video display program 702 as set forth in step 604.

Next, in step 606 and as indicated schematically by arrow 708, the video display player program 702 requests an access token from the LSO server 212, presenting the customer_id of the licensee organization, the hash value extracted from the HTML <EMBED> tag and the IP address of the computer from which the request originated.

In step 608, the LSO server uses the IP address received in the request to access the IP range table 302 in the terms database 210 as indicated by arrow 214. If the IP address is determined to be invalid in step 610, then the process proceeds, via off-page connectors 614, 618, 632, 636, 652 and 656 to step 668 where a message is displayed to the viewer that the selected video cannot be displayed. The process then ends in step 670. Alternatively, if the IP address falls within an IP address range contained in one of the records in table 302 as determined in step 610, the LSO server retrieves that record and the process proceeds, via off-page connectors 612 and 616, to step 620 where the LSO server uses the customer_id field value in the retrieved record to access the customer table 300 and retrieve the customer name.

Next, in step 622, the LSO server 212 attempts to use the hash value received in the access token request to access the auth_key table 410 in the keys database 230 as indicated by arrow 232. Then, in step 624, a determination is made whether the hash value is valid by determining whether the access attempt is successful. If it is determined in step 620 that the hash value is invalid, then the process proceeds, via off-page connectors 632, 636, 652 and 656, to step 668 where a message is displayed to the viewer that the selected video cannot be displayed. The process then ends in step 670.

Alternatively, if in step 624 it is determined that the hash value is valid, then, in step 626, the LSO server 212 retrieves the license_id field value from the auth_key table 410 and uses it to access the license table 408 in the licenses database 220 and retrieve the corresponding license for the licensee organization. The customer_id field value of the retrieved license record is then used to access the customer table 404 and retrieve the customer name.

In step 628, the customer name obtained in step 620 is compared to the customer name obtained in step 626. If it is determined in step 628 that the customer names do not match, the process proceeds, via off-page connectors 632, 636, 652 and 656, to step 668 where a message is displayed to the viewer that the selected video cannot be displayed. The process then ends in step 670.

Alternatively, if it is determined in step 628 that the retrieved customer names match, then the process proceeds, via off-page connectors 630 and 634, to step 638 where the LSO server 212 retrieves the content_item_id value from the corresponding field in the license record that was retrieved in step 626.

Next, in step 640, a determination is made whether the license record that was retrieved in step 626 defines a use count license. This determination is made by examining the value of the limit_type_id field in the license record. If it is determined in step 640 that the license is a use count license, then the process proceeds to step 642 where a determination is made whether the value of the current_use_count field in the license record is less than the value of the max_use_count field in the license record. If this comparison indicates that the maximum number of uses has been reached, then no further viewing of the selected content item is allowed. In this case the process proceeds, via off-page connectors 652 and 656, to step 668 where a message is displayed to the viewer that the selected video cannot be displayed. The process then ends in step 670.

Alternatively, if it is determined in step 642 that the maximum number of uses has not been reached, then the process proceeds to step 644 where the value of the current_use_count field is incremented. The process then proceeds to step 648, which is described below.

If in step 640 it is determined that the retrieved license record is not a use count license, then in the illustrative embodiment, the license must be a time limit license. If additional license type alternatives are available, then the process shown would be modified in a well-known manner. In the case of a time limit license, in step 646, a determination is made whether the current date and time fall within the allowed range defined by the values of the start_date_time and exp_date_time fields in the retrieved license. If the current date and time fall outside of the allowed range, then the license has expired and the process proceeds, via off-page connectors 652 and 656, to step 668 where a message is displayed to the viewer that the selected video cannot be displayed. The process then ends in step 670.

Alternatively, if in step 646, it is determined that the license has not expired, then the process proceeds to step 648 where the LSO server 212 generates a content delivery network (CDN) access token allowing access to the selected media file and returns it to the video display program 702 running in the viewer browser 224 as indicated schematically by arrow 710. The LSO server 212 may generate this token using an algorithm provided by the CDN server 236, or by requesting that the CDN server 236 generate a token corresponding to the selected media file and return it to the LCO server 212. The token is auto-expiring so that it will become invalid after a predetermined period of time after issuance.

The process then proceeds, via off-page connectors 650 and 654 to step 658 where the video display program 702 requests the video stream for the requested media file from the CDN server by presenting the access token received in step 646 as indicated schematically by arrow 712.

In step 660, using its own data structures, the CDN server 236 checks the access token to make sure that the token is valid, has not been used before and has not expired. If it is determined in step 662 that the access token is invalid, then the process proceeds to step 668 where a message is displayed to the viewer that the selected video cannot be displayed. The process then ends in step 670. Alternatively if it is determined in step 662, that the access token is valid, the process proceeds to step 664 where CDN server 236 returns a video stream for the selected media file to the video display program 702 as schematically illustrated by arrow 714. In step 666, the video display program 702 displays the video stream and the process finishes in step 670.

While the invention has been shown and described with reference to a number of embodiments thereof, it will be recognized by those skilled in the art that various changes in form and detail may be made herein without departing from the scope of the invention as defined by the appended claims.

### List of reference signs

- 100: step
- 102: step
- 104: step
- 106: step
- 108: step
- 110: step
- 112: step
- 114: step
- 200: provider
- 202: provider
- 204: provider
- 206: arrow
- 208: arrow
- 210: database
- 212: server
- 214: arrow
- 216: customer
- 218: arrow
- 220: database
- 222: arrow
- 224: browser
- 226: Internet
- 228: arrow
- 230: database
- 232: arrow
- 234: arrow
- 236: server
- 238: arrow
- 240: arrow
- 242: arrow
- 244: server
- 246: database
- 300: table
- 302: table
- 304: table
- 400: table
- 402: table
- 404: table
- 406: table
- 408: table
- 410: table
- 412: table
- 414: table
- 416: table
- 418: symbol
- 500: step
- 502: step
- 504: step
- 506: step
- 508: step
- 510: step
- 600: step
- 602: step
- 604: step
- 606: step
- 608: step
- 610: step
- 612: connector
- 614: connector
- 616: connector
- 618: connector
- 620: step
- 622: step
- 624: step
- 626: step
- 628: step
- 630: connector
- 632: connector
- 634: connector
- 636: connector
- 638: step
- 640: step
- 642: step
- 644: step
- 646: step
- 648: step
- 650: connector
- 652: connector
- 654: connector
- 656: connector
- 658: step
- 660: step
- 662: step
- 664: step
- 666: step
- 668: step
- 670: step
- 700: arrow
- 702: player
- 704: arrow
- 706: arrow
- 708: arrow
- 710: arrow
- 712: arrow
- 714: arrow

## Claims

1. A method for authorizing delivery of streaming video to a computer having a predefined IP address and connected to an intranet that is also connected to an administrative computer and to a server maintained by a licensee organization that has obtained a license for viewing a video content item from a plurality of predetermined IP addresses from a licensing service organization having an LSO server, the method comprising:
causing the administrative computer to insert an authorization key specific to the licensee organization into code stored in the server that defines an intranet web page;
executing the code contained in the intranet page code to cause the computer to send the authorization key and the IP address of the computer to the LSO server;
causing the LSO server to determine whether a received IP address is included in the plurality of predetermined IP addresses for which a licensee organization identified by the authorization key has obtained a license and, if so, to generate an access token specific to the video content item and return the access token to the computer; and
causing the computer to use the access token to download the video content item.

2. The method of claim 1, **characterized by** step (a) comprises executing software causing the administrative computer to send a request for an authorization key to the LSO server and causing the LSO server to respond to the request by generating the authorization key specific to the license obtained by the licensee organization and returning the authorization key to the administrative computer.

3. The method of claim 1, **characterized by** step (b) comprises executing software to cause the computer to navigate to the intranet web page:

4. The method of claim 1, **characterized in, that** the authorization key includes information for accessing the LSO server to retrieve license information including predetermined limitations that must be met in order to view the video content item.

5. The method of claim 1, **characterized by** step (d) comprises executing software to send the access token to a content delivery service server on which the video content item is stored.

6. The method of claim 5, **characterized by** step (d) comprises executing software to cause the content delivery server to determine whether the access token is valid and, if so, to download the video content item to the computer.

7. The method of claim 1, **characterized by** step (b) comprises executing the code contained in the intranet page to download a video display program from the LSO server to the computer and executing the video display program in the computer to send the authorization key and the IP address of the computer to the LSO server.

8. The method of claim 1, **characterized in, that** the plurality of predetermined IP addresses together with information identifying the licensee organization are stored in a license database by the LSO server.

9. The method of claim 8, **characterized in, that** the authorization key accesses the license database to retrieve a license that is specific to the licensee organization and the video content item.

10. The method of claim 9, **characterized by** step (c) comprises executing software causing the LSO server to access the license database with the authorization key to retrieve information identifying the licensee organization and to access the license database with the IP address to obtain information identifying the licensee organization and to compare the identifying information.

11. Apparatus for authorizing delivery of streaming video to a computer having a predefined IP address and connected to an intranet that is also connected to an administrative computer and to a server maintained by a licensee organization that has obtained a license for viewing a video content item from a plurality of predetermined IP addresses from a licensing service organization having an LSO server, the apparatus comprising processors in the computer, the administrative computer and the LSO server that execute software to perform the steps of any of the claims 1 to 10.
